# EUROPÄISCHE PATENTANMELDUNG

(11) **EP 1 571 635 A1**
(43) Veröffentlichungstag der Anmeldung: **07.09.2005**
(21) Anmeldenummer: 05004521.0
(22) Anmeldetag: 02.03.2005
(51) Int. Cl.: G08B 25/01

(54) **Universelle, persönlich zu tragende Notruf-, Sicherheit- und/oder Steuerungseinrichtung**

(30) Priorität: 02.03.2004 DE 102004010181
(71) Anmelder: KRUG-Ruhla Gesellschaft für Notrufe, Sicherheitssysteme und Kontrolldienste mbH, 99842 Ruhla/Thüringen (DE)
(72) Erfinder: Krug, Günter, 99842 Ruhla (DE)
(74) Vertreter: Kruspig, Volkmar

(57) **Zusammenfassung**

Die Erfindung betrifft eine universelle, persönlich zu tragende Notruf-, Sicherheits- und/oder Steuerungseinrichtung auf der Basis einer mechanisch oder elektronisch betriebenen Armbanduhr, welche über einen manuell auslösbaren Hochfrequenz-Impulsgeber verfügt. Erfindungsgemäß sind in einem gemeinsamen Gehäuse ein Uhrenmodul sowie ein autark funktionsfähiges und betätigbares Sendemodul als Initial-Impulsgeber angeordnet. Ein auf den Initialimpuls abgestimmtes Empfängermodul, welches in der Nähe der Steuerungseinrichtung, jedoch von dieser elektrisch und mechanisch getrennt, vorgesehen ist, erzeugt ein Steueroder Alarmsignal nach Empfang mindestens eines der bevorzugt codierten Initialimpulse.

## Beschreibung

Die Erfindung betrifft eine universelle, persönlich zu tragende Notruf-, Sicherheits- und/oder Steuerungseinrichtung auf der Basis einer mechanisch oder elektronisch betriebenen Armbanduhr, welche über einen manuell auslösbaren Hochfrequenz-Impulsgeber verfügt, gemäß Oberbegriff des Patentanspruchs 1.

Aus der gattungsbildenden DE 298 21 197 U1 ist eine als Quarzarmbanduhr aufgebaute Notrufeinrichtung für lebensbedrohlich Erkrankte vorbekannt. Die dortige Notrufeinrichtung besteht aus einer Empfangsantenne, einem Antennenverstärker, einem Empfänger für das GPS-Satellitennavigationssystem und enthält eine Mischeinrichtung für Gewinnung von Daten, die aus den Satellitenkoordinaten, den Daten des Notrufenden, der Art seines Leidens und weiteren Informationen bestehen. Diese dann jeweils im Falle des Notrufs erzeugten Daten werden einem Sender zugeführt, welcher über eine vorhandene Sendeantenne das Dateninformationspaket abstrahlt, während die eigentliche Empfangseinrichtung gesperrt ist.
Die Energieversorgung von Notrufeinrichtungen einerseits und Quarzuhr andererseits arbeiten voneinander unabhängig. Gemäß der vorbekannten Lösung ist weiterhin vorgesehen, dass der Uhrenträger die Batterien ohne Hilfsmittel selbst ersetzen kann und dass die Betriebsbereitschaft des Notrufs dauernd angezeigt wird. Weiterhin soll es möglich sein, die aktuelle Uhrzeit des Sendezeitpunkts des Notrufs aus der Quarzuhr zu entnehmen und in die Datenkette des Notrufs einzubauen.

Bei dieser vorbekannten Notrufeinrichtung ist es jedoch nicht ausgeschlossen, dass die diskret zu haltende Notruffunktion der Armbanduhr von einem nicht Berechtigten erkannt wird mit der Folge, dass die Gefahr einer unerwünschten Entfernung der Uhr besteht so, dass kein wirksamer Notruf mehr abgesetzt werden kann.

Ein weiteres Problem des bekannten Standes der Technik besteht darin, dass zumindest funktional eine Verbindung zwischen der eigentlichen Uhr und den zum Absetzen des Notrufs notwendigen Baugruppen gegeben ist. Dies zieht jedoch höhere Aufwendungen in der Fertigung und damit nicht unerhebliche weitere Kosten nach sich.

Es ist daher Aufgabe der Erfindung, eine weiterentwickelte, universelle, persönlich zu tragende Notruf-, Sicherheits- und/oder Steuerungseinrichtung auf der Basis einer mechanisch oder elektronisch betriebenen Armbanduhr anzugeben, wobei eine Verknüpfung der Notruffunktionen mit der Uhrfunktion nicht stattfindet und darüber hinaus bei einfachen äußerlichen Untersuchungen der Einrichtung es nahezu ausgeschlossen ist, dass deren Notruf- und Sicherheitseigenschaften erkannt werden. Im Sinne der gewünschten langen Einsatzdauer sind Maßnahmen zu ergreifen, die einerseits den Energieverbrauch der Einrichtung minimieren, andererseits aber auch sicherstellen, dass ein Notruf unter allen Umständen abgesetzt werden kann sowie gegebenenfalls eine diskrete Rückmeldung im Sinne einer Bestätigung des Notrufs gewährleistet ist.

Die Lösung der Aufgabe der Erfindung erfolgt durch eine universelle, persönlich zu tragende Notruf-, Sicherheits- und/oder Steuerungseinrichtung auf der Basis einer mechanisch oder elektronisch betriebenen Armbanduhr, welche über einen manuell auslösbaren Hochfrequenz-Impulsgeber verfügt, gemäß den Merkmalen des Patentanspruchs 1, wobei die Unteransprüche mindestens zweckmäßige Ausgestaltungen und Weiterbildungen darstellen.

Erfindungsgemäß wird funktional getrennt in einem gemeinsamen Gehäuse ein an sich bekanntes Uhrenmodul sowie ein autark funktionsfähiges und betätigbares Sendemodul als Initial-Impulsgeber angeordnet.

Weiterhin ist ein auf den Initialimpuls abgestimmtes Empfängermodul in der Nähe der Steuerungseinrichtung, jedoch von dieser elektrisch und mechanisch getrennt, vorgesehen, wobei das Empfängermodul ein Steuer- oder Alarmsignal nach Empfang mindestens eines der bevorzugt codierten Initialimpulse erzeugt.

In Weiterbildung der Erfindung weist das Empfängermodul eine GPS/GSM-Baugruppe auf, wobei mit dem Aktivieren nach Empfang des Initialimpulses eine Ortskoordinatenbestimmung erfolgt und die Ortskoordinaten in Verbindung mit einer gespeicherten Nachricht über die GSM-Baugruppe zu einer Systemzentrale gesendet werden.

Die Bestimmung der jeweiligen Ortskoordinaten kann auch in vorgegebenen Zeitabständen automatisch erfolgen und auf diese Weise aktualisiert werden.

Bevorzugt wird das Empfängermodul an oder in der Kleidung bzw. am Körper des Systemnutzers, an einer vom Trageort der Armbanduhr entfernten Stelle befestigt. Diese Befestigung erfolgt bevorzugt an einem nicht sichtbaren Ort.

Das Empfängermodul kann in einer Ausgestaltung der Erfindung eine Baugruppe zum Empfang von GSM-Signalen aufweisen, wobei diese eine erhaltene Notrufbestätigungsnachricht registriert und an eine Signalisierungseinrichtung weiterleitet.
Diese Signalisierungseinrichtung kann insbesondere ein niederfrequente Schwingungen abgebender Körperschallgeber, z.B. in Form eines Piezoschwingers sein.

Über die Baugruppe zum Empfang von GSM-Signalen erfolgt ein Aktivieren der GPS/GSM-Baugruppe, um z.B. eine Ortsveränderung des Systemnutzers insbesondere in Notfällen zu erfassen.

Das Uhrenmodul und das Initial-Sendemodul sind in einer bevorzugten Sandwichanordnung in einem gemeinsamen Gehäuse befindlich, wobei hier das Initial-Sendemodul unterhalb des Uhrenmoduls angeordnet ist und einen, gegebenenfalls verdeckt ausgeführten Notruftaster aufweist.

Die erfindungsgemäße Einrichtung kann so konfiguriert sein, dass ein Sendemodul mehrere entsprechend codierte Empfängermodule aktiviert. Ebenso besteht die Möglichkeit, dass ein Empfängermodul von mehreren entsprechend codierten Sendemodulen aktivierbar ist.

Die Erfindung soll nachstehend anhand von Zeichnungen sowie eines Ausführungsbeispiels näher erläutert werden.

Wie in der Beschreibungseinleitung bereits zum Ausdruck gebracht, ist es Stand der Technik, mittels Impulsgeber nach dem Funktionsprinzip der Fernwirktechnik Vorgänge funktechnisch auszulösen. Bekannt sind ortsfeste oder mobile Impulsgeber, die Notrufe, Steuerbefehle oder dergleichen über ortsfeste Telefonanschlüsse, über zentrale Notrufdienste im Sinne von Call-Center oder andere Hilfsdienste auslösen. Zur Verfolgung des Weges und des Aufenthaltsortes von Personen werden auch Mobiltelefone oder andere tragbare Sende- und Empfangseinrichtungen genutzt, wobei diese zusätzlich eine Positionsbestimmung ermöglichen, welche auf das GPS (Global Positioning System)-Verfahren zurückgreift.

Hochfrequenz-Fernbedienungs-Impulsgeber sind in der Regel autonome Einrichtungen, die z.B. als Zusatzgerät mitgeführt werden. Derartige Geräte strahlen nicht unerhebliche Sendeleistungen ab und erzeugen elektromagnetische Felder, die z.B. für die Träger von Herzschrittmachern gesundheitlich bedenklich sein können.

Es ist Kennzeichen aller bekannten Lösungen der Fernwirktechnik, dass diese grundsätzlich auf einen Einsatzzweck ausgerichtet sind und ihre Wirkung streng auf den zugeordneten Leistungsbereich beschränkt ist.

Häufig ist die Übermittlung eines Hilferufs an die Rettungszentrale mit einer manuellen Eingabe der persönlichen PIN-Nummer verbunden, was voraussetzt, dass der Hilfesuchende auch in Schocksituationen in der Lage sein muss, diese Informationen einzugeben. Den bekannten Lösungen ist daher gemeinsam, dass sie entweder die manuelle Bedienung des Mobiltelefons oder eines konkreten Notrufgebers voraussetzen oder als Notrufgeber sofort erkennbar sind.

Bei dem als Baukastenlösung ausgeführten Initialsystem gemäß Ausführungsbeispiel wird in der einfachsten Form von einem Uhrenteil und einem Sendeteil ausgegangen, die beide unabhängig voneinander arbeiten. Weiterhin ist ein Empfänger vorgesehen, der den empfangenen Initialimpuls weiterverarbeitet und steuerungstechnisch umsetzt. Ein Ausfall des Uhrenteils beeinträchtigt die Funktion des Impulssenders, d.h. des Initial-Impulsgebers nicht. Die Wirksamkeit des Initial-Impulssenders ist nicht an eine bestimmte Gebrauchslage gebunden. Uhr und Sender sind gemäß Ausführungsbeispiel in einem gemeinsamen Gehäuse so angeordnet, dass die Uhr äußerlich nicht von einer üblichen Armbanduhr unterschieden werden kann.

Die Senderbaugruppe arbeitet bevorzugt im Sleepmodus und wird durch einen im unteren Randbereich des Uhrgehäuses angebrachten Taster aktiviert. Nach dessen Betätigung löst die interne Schaltung einen codierten Sendeimpuls von wenigen Millisekunden Dauer aus. Dieser Impuls ist in seiner Länge von der Dauer der Tastenbetätigung unabhängig. Der Energieinhalt dieses Initialimpulses beträgt wenige Milliwatt und ist gesundheitlich unbedenklich.
Durch die spezielle Tasteranordnung führen äußere Einflüsse wie Stoß, Schlag und Fall nicht zur unerwünschten Alarmauslösung. Es ist Bestandteil der vorgestellten Erfindung, dass die Auslösung des Initialsignals durch den Uhrenträger von Außenstehenden nicht erkannt werden kann. Der Uhrenträger erfühlt die Auslösung des Notrufs durch die Überwindung der Gegenkraft des integrierten Notruftasters.

Die Codierung des Initialimpulses muss dem Uhrenträger nicht bekannt sein, sie muss auch von diesem im Notfall nicht aufgerufen oder eingegeben werden.

Das zugeordnete Empfängermodul arbeitet ebenfalls im Sleepmodus und weist einen geringen Energiebedarf auf, so dass eine Einschaltbereitschaft über einen längeren Zeitraum gewährleistet wird. Mit dem Eintreffen des Initialimpulses wird der Empfänger in den Verarbeitungsmodus überführt. Die dann ansteigende Leistungsaufnahme wird über einen Zeitgeber begrenzt, d.h. nach Ablauf einer vorgegebenen Verarbeitungszeit kehrt der Empfänger in den Sleepmodus zurück. Die Einschaltdauer ist dem jeweiligen speziellen Einsatzzweck anpassbar. Das am Empfängerausgang anliegende Signal schaltet z.B. einen vorprogrammierten Telefonnotruf oder z.B. einen Türöffner ein.

Die Empfangsschaltung ist so ausgelegt, dass das erste empfangene Impulssignal gespeichert wird und für die Funktionsauslösung bindend ist. Weitere Signale, insbesondere Störsignale oder Signale anderer Codierung sind wirkungslos. Es liegt im Sinne der Erfindung, dass mit einer Initialuhr mehrere auf den gleichen Code programmierte Empfänger betrieben werden können oder dass eine Empfängeranordnung für mehrere Initialuhren eingerichtet ist.

In Weiterbildung der Erfindung weist das Baukastensystem bei der vorbeschriebenen Empfängerschaltung als integralen Bestandteil dieser einen GPS/GSM-Baustein auf, der beim Eintreffen des Initialimpulses wirksam wird und die Ortskoordinaten des Auslösenden bestimmt. Diese Ortskoordinaten werden dann an eine vorher eingespeicherte oder in einem Speicher abgelegte Botschaft angefügt und an eine Systemzentrale, z.B. ein Call-Center gesendet. Dieses optimiert den Botschaftsweg und aktiviert im Falle eines Notrufs die am nächsten liegende Hilfseinrichtung. Es ist Bestandteil der vorbeschriebenen Erfindung, dass die Bestimmung der Ortskoordinaten zeitgesteuert und unabhängig vom vorhandenen Initialimpuls erfolgen kann, um im Falle der Unmöglichkeit der momentanen Ortsbestimmung die letzte Position des Auslösenden zu ermitteln.
Die an das Call-Center abgesetzte Botschaft wird in diesem Fall markiert. Diese Möglichkeit ist abschaltbar, wobei hierfür eine entsprechende Schaltungskonfiguration im GPS/GSM-Baustein vorhanden ist.

Die Abmessungen und die Ausgestaltung des GPS/GSM-Bausteins entsprechen ihrem gewünschten mobilen Charakter und lassen eine nicht sichtbare Unterbringung am Körper oder in der Bekleidung des Nutzers zu.

Der Energiezustand des vorerwähnten Bausteins wird durch eine Abfrageeinrichtung angezeigt, wobei auch eine akustische Information bei kritischen Betriebsspannungszuständen möglich ist.

In den Figuren ist eine Uhr mit Impulssender 1, ein Impuls-Empfänger mit Steuerbefehlsgeber 2, ein Impuls-Empfänger mit satellitengestützter Ortsbestimmung und Mobilfunksender 3 und ein Impuls-Empfänger mit satellitengestützter Ortsbestimmungseinrichtung und Mobilfunksender/empfänger 4 dargestellt.

Die Uhr mit Impulssender 1 besteht aus zwei Baueinheiten Armbanduhrwerk 1.1, das entweder ein übliches Quarzuhrwerk oder ein geeignetes mechanisches Armbanduhrwerk sein kann, und dem Sendemodul 1.2 mit dem Taster 1.3, dessen Schaltstößel 1.31 über den Umfang des Sendemoduls hinausragt.
Der Sendemodul 1.2 enthält die zur Energieversorgung des Moduls notwendigen Primärzellen 1.4 und eine Elektronikbaugruppe 1.5 für den Sender.
Die zugehörige Senderantenne 1.6 ist auf der Außenseite des Moduls angebracht.

Uhrenbaueinheit 1.1 und Sendemodul 1.2 sind autonome Baugruppen und werden von einem üblichen Armbanduhrgehäuse umschlossen.

Das Armbanduhrgehäuse 1.7 ist an seinem unteren Rand mit einem Drücker 1.71 versehen, der auf den Schaltstößel 1.31 des Tasters einwirkt und den Sendeimpuls auslöst, dessen Dauer von der eigentlichen Betätigungszeit des Drückers 1.71 unabhängig ist.

Der Impuls-Empfänger 2 enthält die im Sleepmodus arbeitende schmalbandige Empfängerbaugruppe 2.1 mit der Codeerkennungsschaltung und der Empfangsantenne 2.11, die von dieser gesteuerte Schalterbaugruppe 2.2 mit Zeitgeber sowie die Baugruppe zur Energieversorgung 2.3 der Gesamtanordung.

Der Stromweg der Schalterbaugruppe 2.2 ist mit einer Anschlussbuchse 2.21 an die Außenseite des Gehäuses 2.4 des Impuls-Empfängers 2 geführt. Über diese Buchse ist der Anschluss geeigneter ortsfester oder mobiler Notrufe bzw. Notrufeinrichtungen möglich.

Der Impuls-Empfänger 3 enthält die im Sleepmodus arbeitende schmalbandige Empfängerbaugruppe 2.1 mit Codeerkennungsschaltung, einen GPS-Empfänger 3.1 mit Ortskoordinatenausgabe, einen auf das zugehörige Systemcenter abgestimmten Mobilfunksender 3.2, eine Speicherkarte mit personenbezogenem Code oder eine Sprachspeichereinheit mit personenbezogenem Code 3.3, eine Zeitsteuerung 3.4, eine Antenneneinheit 3.5 und die Energieversorgung 3.6.

Der Impuls-Empfänger 4 unterscheidet sich vom Impuls-Empfänger 3 durch eine zusätzliche Mobilfunk-Empfangseinrichtung 4.1, die eine von Dritten unbemerkte Rufbestätigung bei ausgelöstem Notruf durch einen extrem niederfrequenten Körperschallgeber, z.B. in Form eines Piezoaktors zulässt. Zusätzlich kann eine Impulssteuerung 4.2 aktiviert werden, um Ortsveränderungen des Notrufenden zu erfassen und zu verfolgen.

Es liegt im Sinne der Erfindung, die vorstehend beschriebene Einrichtung nicht nur zum Absetzen eines Notrufs zu verwenden, sondern diese gleichzeitig zum Blockieren z.B. der Zündung eines Kraftfahrzeugs zu nutzen, so dass dann auch eine Standortermittlung dieses Fahrzeugs möglich wird.

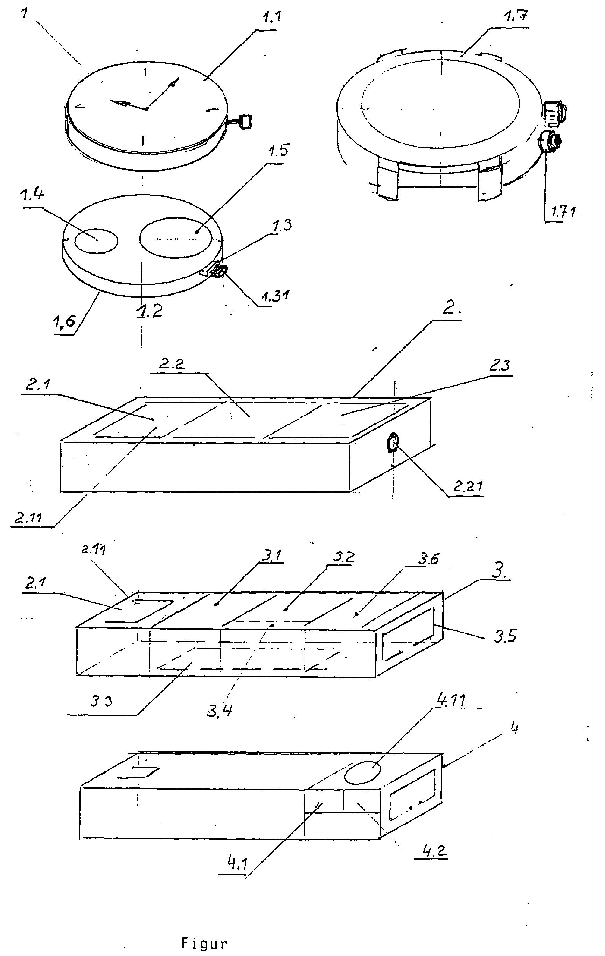

## Patentansprüche

1. Universelle, persönlich zu tragende Notruf-, Sicherheits- und/oder Steuerungseinrichtung auf der Basis einer mechanisch oder elektronisch betriebenen Armbanduhr, welche über einen manuell auslösbaren Hochfrequenz-Impulsgeber verfügt,
**dadurch gekennzeichnet, dass**
in einem gemeinsamen Gehäuse ein Uhrenmodul sowie ein autark funktionsfähiges und betätigbares Sendemodul als Initial-Impulsgeber angeordnet sind und
- ein auf den Initialimpuls abgestimmtes Empfängermodul in der Nähe der Steuerungseinrichtung, jedoch von dieser elektrisch und mechanisch getrennt, vorgesehen ist, wobei das Empfängermodul ein Steuer- oder Alarmsignal nach Empfang mindestens eines der bevorzugt codierten Initialimpulse erzeugt.

2. Universelle Steuerungseinrichtung nach Anspruch 1,
**dadurch gekennzeichnet, dass** das Empfängermodul eine GPS/GSM-Baugruppe aufweist, wobei mit dem Aktivieren nach Empfang des Initialimpulses eine Ortskoordinatenbestimmung erfolgt und die Ortskoordinaten in Verbindung mit einer gespeicherten Nachricht über die GSM-Baugruppe zu einer Systemzentrale gesendet werden.

3. Universelle Steuerungseinrichtung nach Anspruch 2,
**dadurch gekennzeichnet, dass** die Bestimmung der jeweiligen Ortskoordinaten in vorgegebenen Zeitabständen automatisch erfolgt und aktualisiert wird.

4. Universelle Steuerungseinrichtung nach Anspruch 1 oder 2,
**dadurch gekennzeichnet, dass** das Empfängermodul an der Kleidung oder am Körper des Systemnutzers, an einer vom Trageort der Armbanduhr entfernten Stelle befestigt ist.

5. Universelle Steuerungseinrichtung nach Anspruch 4,
**dadurch gekennzeichnet, dass** die Befestigung an nicht sichtbarer Stelle erfolgt.

6. Universelle Steuerungseinrichtung nach einem der vorangegangenen Ansprüche,
**dadurch gekennzeichnet, dass** das Empfängermodul eine Baugruppe zum Empfang von GSM-Signalen aufweist, wobei diese eine erhaltene Notrufbestätigungsnachricht registriert und an eine Signalisierungseinrichtung weiterleitet.

7. Universelle Steuerungseinrichtung nach Anspruch 6,
**dadurch gekennzeichnet, dass** die Signalisierungseinrichtung ein insbesondere niederfrequenter Körperschallgeber ist.

8. Universelle Steuerungseinrichtung nach Anspruch 6,
**dadurch gekennzeichnet, dass** über die Baugruppe zum Empfang von GSM-Signalen ein Aktivieren der GPS/GSM-Baugruppe erfolgt, um eine Ortsveränderung des Systemnutzers, insbesondere in Notfällen zu erfassen.

9. Universelle Steuerungseinrichtung nach einem der vorangegangenen Ansprüche,
**dadurch gekennzeichnet, dass** das Uhrenmodul und Initial-Sendemodul in einer Sandwichanordnung im gemeinsamen Gehäuse befindlich sind.

10. Universelle Steuerungseinrichtung nach Anspruch 9,
**dadurch gekennzeichnet, dass** das Initial-Sendemodul unterhalb des Uhrenmoduls angeordnet ist und einen Notruftaster aufweist.

11. Universelle Steuerungseinrichtung nach einem der vorangegangenen Ansprüche,
**dadurch gekennzeichnet, dass** ein Sendemodul mehrere entsprechend codierte Empfängermodule aktiviert.

12. Universelle Steuerungseinrichtung nach einem der Ansprüche 1 bis 10,
**dadurch gekennzeichnet, dass** ein Empfängermodul von mehreren entsprechend codierten Sendemodulen aktivierbar ist.
